# EUROPÄISCHE PATENTSCHRIFT

(11) **EP 1 196 976 B1**
(45) Veröffentlichungstag und Bekanntmachung des Hinweises auf die Patenterteilung: **09.04.2003**
(21) Anmeldenummer: 00954280.4
(22) Anmeldetag: 21.06.2000
(51) Int. Cl.: H02J 7/14, B60R 16/02

(54) **BATTERIESYSTEM**
BATTERY SYSTEM
SYSTEME DE BATTERIE

(30) Priorität: 25.06.1999 DE 19929246
(43) Veröffentlichungstag der Anmeldung: 17.04.2002
(73) Patentinhaber: Volkswagen Aktiengesellschaft, 38436 Wolfsburg (DE)
(72) Erfinder: URLASS, Thorsten, D-38474 Tülau (DE); LOGEMANN, Günther, D-38519 Gifhorn (DE)
(74) Vertreter: Effert, Bressel und Kollegen
(86) Internationale Anmeldenummer: DE0002007
(87) Internationale Veröffentlichungsnummer: WO01001543

(56) Entgegenhaltungen:
- EP-A- 0 537 754
- EP-A- 0 583 630
- DE-A- 4 028 242
- US-A- 5 321 389
- PATENT ABSTRACTS OF JAPAN vol. 005, no. 172 (M-095), 31. Oktober 1981 (1981-10-31) & JP 56 098567 A (MITSUBISHI ELECTRIC CORP), 8. August 1981 (1981-08-08)

## Beschreibung

Die Erfindung betrifft ein Batteriesystem und ein Verfahren zur Ansteuerung eines Batteriesystems, insbesondere in einem Zwei-Batteriensystem.

Ein derartiges Zwei-Batteriensystem mit einer Bordnetzbatterie und einer Starterbatterie ist aus der DE 38 41 769 bekannt, die bei laufendem Generator miteinander verbunden sind. Dies hat bei geringer Generatorstromzufuhr den Nachteil, daß die Bordnetzbatterie durch Ladungsausgleich auf Kosten der Starterbatterie geladen wird, wenn der Ladezustand der Bordnetzbatterie schlechter als der der Starterbatterie ist. Beim bekannten Bordnetz ist auch zwischen der Bordnetzbatterie mit den Bordnetzverbrauchern und dem übrigen Teil des Bordnetzes ein Schalter angebracht, der bei Generatorstillstand geöffnet wird, sobald die Starterbatteriespannung unter einen zulässigen Grenzwert sinkt. Diese Maßnahme schützt die Starterbatterie nur bei Generatorstillstand vor einer vollständigen Entladung und läßt zudem einer Teilentladung der Starterbatterie zu. Durch diese schlechte Ausgangsbedingung wird beim Fahrtbeginn die Belastung der Starterbatterie verstärkt, wenn ein Ladungsausgleich der beiden Batterien zu Ungunsten der Starterbatterie stattfindet. Dies kann im Extremfall zur vollständigen Entladung oder Zerstörung der Starterbatterie führen.

Aus der DE 40 28 242 ist ein Zwei-Batteriensystem bekannt, bei dem bei Verbindung zwischen Starterbatterie und Bordnetzbatterie unabhängig vom Fahrzustand auftrennbar ist, wenn anderenfalls die Bordnetzbatterie aus der Starterbatterie aufgeladen werden würde. Die beiden Batterien sind miteinander verbunden, wenn die Bordnetzbatteriespannung größer ist als die Starterbatteriespannung. Ist die Spannung der Bordnetzbatterie kleiner als die der Starterbatterie; werden die beiden Batterien voneinander getrennt. Die Trennung kann unterschiedlich, beispielsweise durch Abschalten der Starterbatterie vom übrigen Bordnetz vorgenommen werden.

Auf diese Weise wird die Starterbatterie nicht durch eine entladene Bordnetzbatterie belastet, der Generator kann im Arbeitsmodus die wichtigsten Verbraucher versorgen und gleichzeitig die Bordnetzbatterie aufladen. Die beiden Batterien können auch durch ein Abschalten der Bordnetzbatterie vom übrigen Bordnetz getrennt werden. Bei einer gegebenenfalls dann bestehenden Verbindung zwischen Generator und Starterbatterie kann die Starterbatterie aufgeladen werden.

Ein allgemeines Problem bei den Zwei-Batteriesystemen ist die Anordnung der Starterbatterie im Kraftfahrzeug bei begrenztem Bauraum. Um bei Unfällen die Brandgefahr aufgrund elektrischer Kurzschlüsse zu verhindern, muß die Starterleitung, über die der Starter mit der Starterbatterie permanent elektrisch verbunden ist, durch crashsichere Zonen im Kraftfahrzeug gelegt werden. Dies gilt auch für die Starterleitung in Ein-Batteriesystemen. Alternativ sind bereits pyrotechnische Batterieklemmen vorgeschlagen worden, die vor oder während eines Unfalls von den Batterien irreversibel abgesprengt werden und so den elektrischen Stromfluß unterbrechen. Die Ansteuerung der pyrotechnischen Klemmen erfolgt dabei meist über eine Precrashsensorik, die beispielsweise die Signale eines Airbagsteuergerätes auswertet. Neben den hohen Kösten ist an den pyrotechischen Klemmen deren aufwendige Ansteuerung nachteilig, da eine versehentliche Auslösung vermieden werden muß, da ansonsten das Kraftfahrzeug nicht mehr gestartet werden kann. Generell ist die Irreversibilität nachteilig, da nach jeder Auslösung die Klemmen ausgetauscht werden müssen.

Der Erfindung liegt daher das technische Problem zugrunde, ein Batteriesystern und ein Verfahren zur Ansteuerung eines solchen Systerns zu schaffen, mittels derer einfacher und kostengünstiger die Brandgefahr reduzierbar ist. Ein weiteres Problem ist die Schaffung eines vereinfachten Lademanagements für die Starterbatterie in einem Zwei-Batteriensystem.

Die Lösung des technischen Problems ergibt sich durch einen Gegenstand mit den Merkmalen der Patentansprüche 1 und 9. Weitere vorteilhafte Ausgestaltungen der Erfindung ergeben sich aus den Unteransprüchen.

Durch die Anordnung mindestens einer elektronischen Polklemme zwischen dem Starter und der Batterie bzw. der Starterbatterie in einem Zwei-Batteriensystem, über die die Starterleitung spannungslos schaltbar ist, kann die im Regelfall spannungslose Starterleitung beliebig im Kraftfahrzeug angeordnet werden, ohne eine Brandgefahrenquelle darzustellen. Dies vergrößert die Freiheitsgrade bei der Verkabelung, da Bauraumrestriktionen weitgehend entfallen. Hierzu wird die elektrische Polklemme nur in der unmittelbaren Startphase durchgeschaltet und ansonsten im Sperrzustand betrieben. In Abhängigkeit von dem weiteren Schaltungskonzept muß sichergestellt werden, daß in Zwei-Batteriesystemen auch die Bordneizbatterie, falls diese mit dem Starter verbunden ist bzw. auf den Starter geschaltet werden kann, um den Startvorgang zu unterstützten, durch eine elektronische Polklemme von der Starterleitung getrennt werden kann, so daß die Spannungslosigkeit der Starterleitung gewährleistet ist. Je nach Schaltungskonzept können dabei die elektronischen Polklemmen gleichartig oder verschieden ausgebildet sein. Ein weiterer Vorteil ist, daß durch die elektronischen Polklemmen in der Standphase die Starterbatterie mit den startrelevanten Verbrauchern vom übrigen Bordnetz elektrisch getrennt ist, so daß die Starterbatterie über längere Standphasen eine ausreichende Starterspannung zur Verfügung stellen kann. Verfahrensmäßig wird dabei bei der Erfassung eines beabsichtigten Startvorganges ein Start-Signal (Klemme (50)-Signal) erzeugt, über das die elektronischen Pölklemmen in der Startphase durchgeschaltet werden und nach erfolgtem Start wieder gesperrt werden. Ist das kraftfahrzeug mit einem mechanischen Zündanschloß ausgebildet, so wird das Klemme (50)-Signal unmittelbar durch die Drehung des Zündschlüssels erzeugt und der Startvorgang unmittelbar eingeleitet, falls die Starterbatterie und gegebenfalls die Bordnetzbatterie ausreichend Spannung zur Verfügung stellen können. Ist das Kraftfahrzeug hingegen mit einem elektronischen Zündanlaßschloß verbunden, so wird zunächst durch ein Startfreigabesteuergerät überprüft, ob die startrelevanten Verbraucher ausreichend Vorsorgungsspannung erhalten. Ist dies der Fall, so erzeugt das Startfreigabesteuergerät ein Klemme (50)-Signal und die elektronische Polklemme der Starterbatterie und gegebenenfalls der Bordnetzbatterie wird durchgeschaltet, so daß über die nun spannungführende Starterleitung der Starter mit einer Starterspannung versorgt wird und den Generator anwirft. Änschließend werden die elektronischen Polklemmen wieder gesperrt und die Starterleitung spannungslos geschaltet. Unabhängig von der Ausbildung des Zündanlaßschloßes wird so sichergestellt, daß nur in der unmittelbaren Startphase die Starterleitung spannungsführend ist und ansönsten spannungslos geschaltet ist.

Vorzugsweise sind die elektronischen Polklemmen als schaltbare Leistungshalbleiter ausgebildet, über die entsprechend große Stromstärken mit kleinen Steuerströmen schaltbar sind. In einer weiteren bevorzugten Ausführungsform ist die elektronische Polklemme als CMOS-FET ausgebildet, so daß im wesentlichen nur bei den Schaltungsvorgängen eine elektrische Verlustleistung auftritt. Um entsprechendes Gatespannungen zu erzeugen, ist der FET mit einer Ladepumpe ausgebildet, die bis zu einer Bordnetzspannung von beispielsweise 3 V arbeitet und die entsprechende Gatespannung aufbaut. Im stationären Fall hingegen ist der Ruhestrom durch den CMOS-FET vernachlässigbar, so daß die Batterien nicht belastet werden. Derartige CMOS-FETs sind mit einem Übergangswiderstand im durchgeschaiteten Zustand von 0,5 - 0,6 mΩ behaftet, so daß der Spannungsabfall bei 1200 A nur bei 0,6 - 0,72 V liegt. Beim Kaltstart liegt der Widerstand sogar nur bei ungefähr 0,4 mΩ, so daß der Spannungsabfall nur 0,48 V beträgt. Somit steht nahezu die gesamte Batteriespannung dem Starter zur Verfügung.

Durch die elektronische Polklemme zwischen Starter und Starterbatterie kann bei entladener Starterbatterie ein Fremdstart im Motorraum nicht mehr erfolgen. Hierzu wird der Starterbatterie daher ein Abgriff, vorzugsweise in Form eine Stromschiene, zugeordnet, über die dann eine externe Batterie an die Starterbatterie geschaltet werden kann. Dieser Abgriff bildet einen Fremdstarthilfepunkt, der an beliebiger Stelle im Kraftfahrzeug angeordnet sein kann, vorzugsweise jedoch in unmittelbarer Umgebung der Starterbatterie angeordnet ist. Diese Ausführungen gelten sinngemäß auch für Ein-Batteriesysteme.

In einer weiteren bevorzugten Ausführungsform ist zwischen dem Pluspol des Generators und dem Pluspol der Starterbatterie ein Leistungsschalter angeordnet, der durch ein die Erregung des Generators repräsentierendes Signal geschaltet wird. Im abgestellten Zustand ist dabei der Leistungsschalter offen. Im offenen Zustand bewirkt der Leistungsschalter eine Abtrennung der Starterbatterie vom Bordnetz, so daß die Starterbatterie über das Bordnetz nicht entladen werden kann. Im Fahrbetrieb mit erregtem Generator ist der Leistungsschalter geschlossen, so daß die auch im Fahrbetrieb aktiven startrelevanten Verbraucher über die Bordnetzbatterie bzw. den Generator versorgt werden. Aufgrund der Spannungsdifferenz zwischen dem Generator mit ca. 14,4 V und den maximal 12 V der Starterbatterie ist ein gerichteter Ladestrom für die Starterbatterie sichergestellt. Die Verbindung zwischen Starterbatterie und Leistungsschalter erfolgt dabei vorzugsweise ebenfalls über den Abgriff. Dieser Abgriff kann ebenfalls für eine Verbindung zu einem gegebenenfalls vorhandenen Startfreigabesteuergerät genutzt werden, das die. ausreichende Spannungsversorgung der startrelevanten Verbraucher überprüft und bei positivem Ergebnis das Klemme (50) - Signal für die elektronischen Polklemmen erzeugt.

Vorzugsweise werden die Starterbatterie, die elektronischen Polklemmen , der Abgriff und der Leistungsschalter unter dem Fahrersitz angeordnet. Ein weiterer Vorteil dieser Anordnung ist der erhöhte Diebstahlschutz, da von außen die Starterbattterie nicht mehr manipulierbar ist.

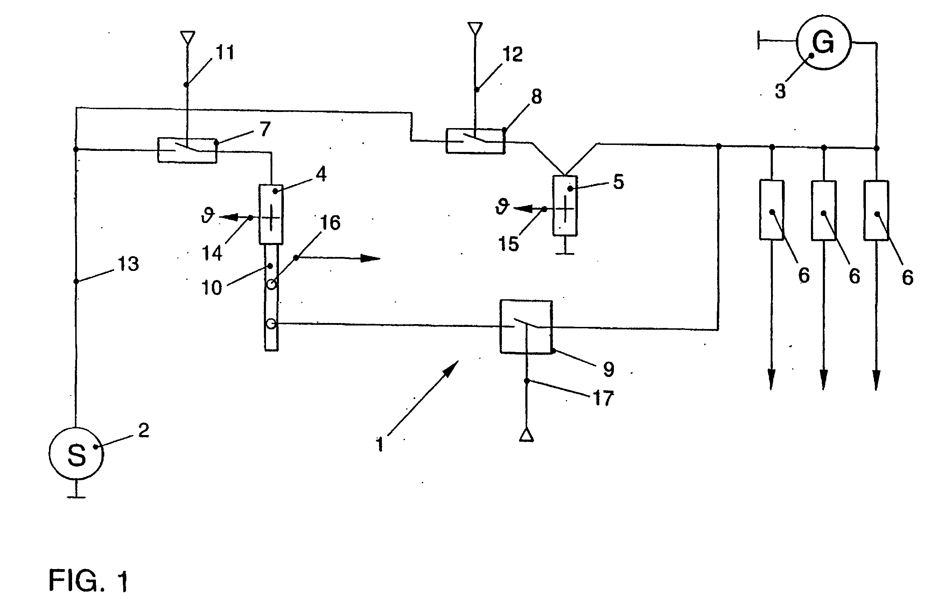

Die Erfindung wird nachfolgend anhand eines bevorzugten Ausführungsbeispiels näher erläutert. Die einzige Figur zeigt ein schematisches Blockschaltbild eines Zwei-Batteriesystems.

Das Zwei-Batteriesystem 1 umfaßt einen Starter 2, einen Generator 3, eine Starterbatterie 4, eine Bordnetzbatterie 5, elektrische Verbraucher 6, eine zwischen Starter 2 und Pluspol der Starterbatterie 4 angeordnete elektronische Polklemme 7, eine zwischen Starter 2 und Pluspol der Bordnetzbatterie 5 angeordnete Polklemme 8, einen Leistungsschalter 9, der zwischen dem Pluspol der Starterbatterie 5 und dem Pluspol des Generators 3 und dem Pluspol der Bordnetzbatterie 5 angeordnet ist und einem am Pluspol der Starterbatterie 4 angeordneten Abgriff 10. Die beiden elektronischen Polklemmen 7, 8 sind jeweils mit einer Steuerleitung 11, 12 ausgebildet, über die den elektrischen Polklemmen 7, 8 ein Klemme (50) - Signal zuführbar ist. Über eine Starterleitung 13 ist der Starter 2 mit den beiden elektronischen Polklemmen 7, 8 elektrisch verbunden. Des weiteren sind die Starterbatterie 4 und die Bordnetzbatterie 5 jeweils mit Temperaturüberwachungseinrichtungen 14, 15 ausgebildet, die hier aber nicht näher erläutert werden sollen.

Im abgestellten Zustand sind die elektronischen Polklemmen 7, 8 und der Leistungsschalter 9 offen. Bei Halbleiter bedeutet dies, daß diese in Sperrichtung gepolt sind. Nachfolgend wird allgemein nur noch von offen und zu gesprochen, was durch die Darstellung der elektronischen Polklemmen 7, 8 als Schalter symbolisiert ist. Dadurch ist die Starterleitung 13 spannungslos. Sollte daher im abgestellten Zustand ein Unfall geschehen, so kann ein Kurzschluß auf der Starterleitung 13 keine Gefahrenquelle darstellen, da diese spannungslos ist. Der benötigte Ruhestrom für die elektrischen Verbraucher im Bordnetz wird wie herkömmlich durch die Bordnetzbatterie 5 zur Verfügung gestellt, wohingegen die Starterbatterie 4 vom übrigen Bordnetz über den offenen Leistungsschalter 9 getrennt ist und nur den Ruhestrom für die startrelevanten Verbraucher zur Verfügung stellen muß.

Möchte nun der Kraftfahrzeugführer das Kraftfahrzeug starten, so wird je nach Ausführung als mechanisches oder elektronisches Zündanlaßschloß ein die Betätigung des Zündschlosses repräsentierendes Signal erfaßt. Bei einem mechanischen Zündanlaßschloß wird dann durch das Schließen des Schalters direkt ein Klemme (50)-Signal erzeugt. Bei einem elektronischen Zündanlaßschloß wird hingegen zunächst nur der beabsichtigte Startwunsch erfaßt. Hierauf überprüft ein nicht dargestelltes Startfreigabesteuergerät, ob die startrelevanten Verbraucher ausreichend Versorgungsspannung aufweisen, wobei das Startfreigabesteuergerät über eine Versorgungsleitung 16 mit der Starterbatterie 4 über den Abgriff 10 verbunden ist. Sind die startrelevanten Verbraucher ausreichend versorgt, so erzeugt das Startfreigabesteuergerät ein Klemme (50) - Signal, das an den beiden Steuerleitungen 11, 12 anliegt. Gegebenenfalls überprüft das Startfreigabesteuergerät, ob in der Standphase ein Unfall stattgefunden hat, indem ein Airbagsteuergerät ausgewertet wird. Ein möglicher Kurzschluß auf der Starterleitung 13 kann auch durch die Auswertung der Ströme durch die elektronischen Polklemmen 7, 8 erfolgen, wobei dann die elektronischen Polklemmen 7, 8 automatisch sperren.

Durch das Klemme (50)-Signal schließen die beiden elektronischen Polklemmen 7, 8, und am Starter 2 liegen über die Starterleitung 13 die Spannung der Starterbatterie 4 und Bordnetzbatterie 5 an, wobei die Spannungsabfälle über den etektronischen Polklemmen 7, 8 vernachlässigbar sind. Nachdem der Starter 2 voll eingespurt hat und der Generätor 3 läuft, werdend die beiden elektronischen Polklemmen 7, 8 geöffnet, und die Starterleitung 13 ist wieder spannungslos. Sollte daher während der Fahrt ein Unfall geschehen, sind Kurzschlüsse auf der Starterleitung 13 wie beim Stillstand unkritisch.

Aufgrund der elektronischen Polklemme 7 muß ein separater Fremdstarthilfepunkt existieren. Hierzu kann der Abgriff 10 verwendet werden, an den eine externe Batterie anschließbar ist, falls die Starterbatterie 4 zu stark entladen ist. Nachdem durch die externe Batterie die Starterbatterie 4 aufgeladen wurde, werden die startrelevanten Verbraucher einschließlich eines gegebenenfalls vorhandenen Startfreigabesteuergerätes wieder ausreichend von der Starterbatterie 4 mit Spannung versorgt, so daß der weitere Startvorgang wie oben beschrieben abläuft.

Über den Leistungsschalter 9, der über eine Steuerleitung 17 mit einem den Betriebszustand des Generators 3 charakterisierenden Signal beaufschlagbar ist, kann ein sehr einfaches Lademanagement für die Starterbatterie 4 realisiert werden. Solange der Generator 3 nicht erregt ist, ist der Leistungsschalter 9 offen und die Starterbatterie 4 wird durch das übrige Bordnetz nicht belastet. Erst wenn der Generator 3 erregt ist, also ausreichend Spannung für das Bordnetz und die 8ordnetzbatterie 5 zur Verfügung stellt, wird der Leistungsschalter 9 geschlossen, wobei aufgrund der Spannungsdifferenz zwischen Generator 3 und der Starterbatterie 4 ein gerichteter Stromfluß vom Generator 3 zur Starterbatterie 4 sichergestellt ist. Dadurch wird im Fahrbetrieb die Starterbatterie 4 nicht durch die auch im Fahrbetrieb aktiven startrelevanten Verbraucher wie beispielsweise das Bordnetzsteuergerät belastet.

### BEZUGSZEICHENLISTE

- 1): Zwei-Battteriesystem
- 2): Starter
- 3): Generator
- 4): Starterbatterie
- 5): Bordnetzbatterie
- 6): Verbraucher
- 7): Polklemme
- 8): Polklemme
- 9): Leistungsschalter
- 10): Abgriff
- 11): Steuerleitung
- 12): Steuerleitung
- 13): Starterleitung
- 14): Temperaturuberwachungseinrichtung
- 15): Temperaturüberwachungseinrichtung
- 16): Versorgungsleitung
- 17): Steuerleitung

## Patentansprüche

1. Batteriesystem, umfassend einen Generator, einen Starter und mindestens eine Batterie 4,5), wobei der Starter über eine Starterteitung mit der
Batterie verbunden ist,
**dadurch gekennzeichnet, daß**
zwischen dem Starter (2) und der Batterie eine elektronische Polklemme (7) angeordnet ist, über die die Starterleitung (13) mit Ausnahme der Startphase spannungslos geschaltet ist.

2. Batteriesystem nach Anspruch 1, **dadurch gekennzeichnet, daß** dieBatterie als Starterbatterie (4) eines Zwei-Batteriensystems ausgebildet ist.

3. Batteriesystem nach Anspruch 2, **dadurch gekennzeichnet, daß** zwischen dem Starter (2) und einer Bordnetzbatterie (5) eine elektronische Polklemme (8) angeordnet ist, wobei über die beiden elektronischen Polklemmen (7, 8) die Starterbatterie (4) und die Bordnetzbatterie (5) parallelschaltbar sind.

4. Batteriesystem nach einem der vorangegangenen Ansprüche, **dadurch gekennzeichnet, daß** die elektrischen Polklemmen (7, 8) als schaltbare Leistungshalbleiter, insbesondere als CMOS-Feldeffekttransistoren ausgebildet sind.

5. Batteriesystem nach einem der vorangegangenen Ansprüche, **dadurch gekennzeichnet, daß** der Batterie bzw. der Starterbatterie (4) ein Abgriff (10) zugeordnet ist, mittels dessen eine externe Batterie an die Batterie bzw. die Starterbatterie (4) anschließbar ist.

6. Batteriesystern nach einem der Ansprüche 2 bis 5, **dadurch gekennzeichnet, daß** der Generator (3) und die Starterbatterie (4) über einen Leistungsschalter (9) miteinander verbunden sind.

7. Batteriesystem nach Anspruch 6, **dadurch gekennzeichnet, daß** der Leistungsschalter (9) über ein Generatorbetriebssignal ansteuerbar ist.

8. Batteriesystem nach einem der vorangegangenen Ansprüche, **dadurch gekennzeichnet, daß** die elektronischen Polklemmen (7, 8) und/oder die Starterbatterie (4) und/oder der Leistungsschalter (9) im Fahrzeuginnenraum angeordnet sind.

9. Verfahren zur Ansteuerung eines Batteriesystems, mittels eines Generators, eines Starters, mindestens einer Batterie (4, 5) und einer zugehörigen elektronischen Polklemme (7, 8) die zwischen dem Starter und der Batterie angeordnet ist; wobei über die elektronische Polklemme (7, 8) eine Starterleitung (13) mit Ausnahme der Startphase spannungslos geschaltet wird, umfassend folgende Verfahrensschritte:
a) Erfassen eines beabsichtigten Startvorganges durch den Nutzer,
b) Erzeugen eines Start-Signals, mittels dessen die mindestens eine elektronische Polklemme (7, 8) durchgeschaltet wird und
c) Abschalten des Start-Signals, wenn die Inbetriebnahme des Generators (3) erfaßt wird.

10. Verfahren nach Anspruch 9, mittels mindestens einer Starterbatterie (4) und einer Bordnetzbatterie (5), wobei die Starterbatterie (4) über einen Leistungsschalter (9) mit dem Generator (3) verbunden ist, umfassend folgende Verfahrensschritte:
a) Erfassen der Inbetriebnahme des Generators und
b) Durchschalten des Leistungsschalters (9) durch ein den erregten Betrieb des Generators (3) repräsentierendes Signal.

## Claims

1. Battery system, comprising a generator, a starter and at least one battery (4, 5), with the starter being connected to the battery via a starter cable,
**characterized in that**
an electronic pole terminal (7) is arranged between the starter (2) and the battery and, with the exception of the start phase, the starter cable (13) is switched via the electronic pole terminal (7) such that it is not live.

2. Battery system according to Claim 1, **characterized in that** the battery is in the form of a starter battery (4) in a two-battery system.

3. Battery system according to Claim 2, **characterized in that** an electronic pole terminal (8) is arranged between the starter (2) and a vehicle power supply system battery (5), in which case the starter battery (4) and the vehicle power supply system battery (5) can be connected in parallel via the two electronic pole terminals (7, 8).

4. Battery system according to one of the preceding claims, **characterized in that** the electrical pole terminals (7, 8) are in the form of switchable power semiconductors, in particular CMOS field effect transistors.

5. Battery system according to one of the preceding claims, **characterized in that** the battery and/or the starter battery (4) have/has an associated tap (10), by means of which an external battery can be connected to the battery and/or to the starter battery (4).

6. Battery system according to one of Claims 2 to 5, **characterized in that** the generator (3) and the starter battery (4) are connected to one another via a power switch (9).

7. Battery system according to Claim 6, **characterized in that** the power switch (9) can be driven via a generator operating signal.

8. Battery system according to one of the preceding claims, **characterized in that** the electronic pole terminals (7, 8) and/or the starter battery (4) and/or the power switch (9) are/is arranged in the vehicle interior.

9. Method for driving a battery system, by means of a generator, a starter, at least one battery (4, 5) and an associated electronic pole terminal (7, 8), which is arranged between the starter and the battery, in which, with the exception of the start phase, a starter cable (13) is switched via the electronic pole terminal (7, 8) such that it is not live, comprising the following method steps:
a) detection of a deliberate starting process by the user,
b) production of a start signal, by means of which the at least one electronic pole terminal (7, 8) is switched through, and
c) switching off the start signal once the starting up of the generator (3) has been detected.

10. Method according to Claim 9, by means of at least one starter battery (4) and one vehicle power supply system battery (5), with the starter battery (4) being connected to the generator (3) via a power switch (9), comprising the following method steps:
a) detection of the starting up of the generator, and
b) switching through the power switch (9) by means of a signal which represents the excited operation of the generator (3).

## Revendications

1. Système de batteries comprenant un générateur, un démarreur et au moins une batterie (4, 5), le démarreur étant relié à la batterie par un conducteur de démarreur,
**caractérisé en ce que**
entre le démarreur (2) et la batterie est disposée une borne polaire électronique (7) par l'intermédiaire de laquelle le conducteur de démarreur (13) est raccordé sans tension, à l'exception de la phase de démarrage.

2. Système de batteries selon la revendication 1, **caractérisé en ce que** la batterie est configurée comme batterie de démarreur (4) d'un système à deux batteries.

3. Système de batteries selon la revendication 2, **caractérisé en ce qu'**entre le démarreur (2) et une batterie (5) de réseau de bord est disposée une borne polaire électronique (8), la batterie de démarreur (4) et la batterie du réseau de bord (5) pouvant être branchées en parallèle par l'intermédiaire des deux bornes polaires électroniques (7, 8).

4. Système de batteries selon l'une des revendications précédentes, **caractérisé en ce que** les bornes polaires électriques (7, 8) sont configurées comme semi-conducteurs de puissance commutables, en particulier comme transistors CMOS à effet de champ.

5. Système de batteries selon l'une des revendications précédentes, **caractérisé en ce qu'**un soutirage (10) est associé à la batterie ou à la batterie de démarreur (4) et permet de raccorder une batterie externe à la batterie ou à la batterie de démarreur (4).

6. Système de batteries selon l'une des revendications 2 à 5, **caractérisé en ce que** le générateur (3) et la batterie de démarreur (4) sont reliés l'un à l'autre par un commutateur de puissance (9).

7. Système de batteries selon la revendication 6, **caractérisé en ce que** le commutateur de puissance (9) peut être commandé par un signal de fonctionnement du générateur.

8. Système de batteries selon l'une des revendications précédentes, **caractérisé en ce que** les bornes polaires électroniques (7, 8) et/ou la batterie de démarreur (4) et/ou le commutateur de puissance (9) sont disposés dans l'habitacle du véhicule.

9. Procédé pour la commande d'un système de batteries constitué d'un générateur, d'un démarreur, d'au moins une batterie (4, 5) et d'une borne polaire électronique (7, 8) associée qui est disposée entre le démarreur et la batterie, un conducteur de démarreur (13) étant raccordé par l'intermédiaire de la borne polaire électronique (7, 8) sans tension, à l'exception de la phase de démarrage, lequel procédé comprend les étapes suivantes:
a) détection d'une opération de démarrage voulue par l'utilisateur,
b) création d'un signal de démarrage au moyen duquel l'au moins une borne polaire électronique (7, 8) est branchée, et
c) débranchement du signal de démarrage lorsque la mise en service du générateur (3) est détectée.

10. Procédé selon la revendication 9, mis en oeuvre au moyen d'au moins une batterie de démarreur (4) et une batterie de réseau de bord (5), la batterie de démarreur (4) étant reliée au générateur (3) par l'intermédiaire d'un commutateur de puissance (9), lequel procédé comprend les étapes suivantes:
a) détection de la mise en service du générateur et
b) branchement du commutateur de puissance (9) par un signal qui représente le fonctionnement excité du générateur (3).
